Europäisches Patentamt

European Patent Office

Office européen des brevets

(19)

(11) Veröffentlichungsnummer: **0 270 108**
**A2**

(12) **EUROPÄISCHE PATENTANMELDUNG**

(21) Anmeldenummer: 87117875.2

(22) Anmeldetag: 03.12.87

(51) Int. Cl.⁴: **A61C 5/08** , A61C 13/225

(30) Priorität: 04.12.86 DE 3641456
12.08.87 DE 3726766

(43) Veröffentlichungstag der Anmeldung:
08.06.88 Patentblatt 88/23

(84) Benannte Vertragsstaaten:
BE DE ES FR GB IT

(71) Anmelder: **Firma Brügmann KG**
**Limburger Strasse 31**
**D-5860 Iserlohn(DE)**

(72) Erfinder: **Speckmann, Frank**
**Karl-Halle-Strasse 101**
**D-5800 Hagen-Halden(DE)**

(74) Vertreter: **Hassler, Werner, Dr.**
**Postfach 17 04 Asenberg 62**
**D-5880 Lüdenscheid(DE)**

(54) Aufsteckkrone.

(57) Eine Aufsteckkrone zum Aufstecken auf eine Unterkrone, wobei die Außenseite der Unterkrone und die Innenseite der Aufsteckkrone jeweils mindestens einen parallel zur Aufsteckrichtung ausgerichteten Abschnitt aufweisen und wobei beide Abschnitte aufeinander passen. Das technische Problem ist eine solche Ausbildung einer Aufsteckkronen, daß jederzeit eine Einstellung bzw. Nachstellung des Reibschlusses bzw. der Friktionskraft möglich ist. Die Innenseite (7) der Aufsteckkrone (5) weist im Bereich des genannten Abschnittes eine mit ihrer Wurzel (11) eingelegte Zunge (8) mit einem der Stirnöffnung der Aufsteckkrone (5) zugewandten, in die Stirnöffnung hineinracgenden, elastischen Schenkel (23) auf, der reibschlüssig mit der Außenseite (6) der Unterkrone (4) in Eingriff ist.

Fig.1

EP 0 270 108 A2

## Aufsteckkrone

Die Erfindung betrifft eine Aufsteckkrone zum Aufstecken auf eine Unterkrone, wobei die Außenseite der Unterkrone und die Innenseite der Aufsteckkrone jeweils mindestens einen parallel zur Aufsteckrichtung ausgerichteten Abschnitt aufweisen und wobei beide Abschnitte aufeinander passen.

Aufsteckkronen, also Teleskopkronen oder Konuskronen, werden durch Reibschluß auf der Unterkrone festgehalten. Dieser Reibschluß wird im Laufe der Zeit geringer, so daß die Haltewirkung kleiner wird. Dieses ist insbesondere bei Oberkieferprothesen nachteilig.

Aufgabe der Erfindung ist eine solche Ausbildung einer Aufsteckkronen, daß jederzeit eine Einstellung bzw. Nachstellung des Reibschlusses bzw. der Friktionskraft möglich ist.

Diese Aufgabe wird nach der Erfindung dadurch gelöst, daß die Innenseite der Aufsteckkrone im Bereich des genannten Abschnittes eine mit ihrer Wurzel eingelegte Zunge mit einem der Stirnöffnung der Aufsteckkrone zugewandten, in die Stirnöffnung hineinragenden, elastischen Schenkel aufweist, der reibschlüssig mit der Außenseite der Unterkrone in Eingriff ist.

Die Erfindung unterscheidet sich insofern vom Stand der Technik, als der elastische Zungenschenkel entsprechend seiner Einstellung bzw. Verstellung eine Nachstellung des Reibschlusses bzw. der Friktionskraft ermöglicht. Vor allem ist die Zunge in die Aufsteckkrone leicht einsteckbar und innerhalb derselben leicht austauschbar.

Die Halterung der Zunge in der Aufsteckkrone wird dadurch gesichert, daß zur Aufnahme der Zungenwurzel eine Hinterschneidungsnut vorgesehen ist.

Eine Festlegung der Zunge innerhalb der Hinterschneidungsnut wird dadurch erzielt, daß die Zungenwurzel durch einen in ein Loch innerhalb der Aufsteckkrone eingreifenden Gewindestift gesichert ist. Der Gewindestift wird durch das Gewinde in dem Gewindedurchgang der Zungenwurzel gehalten, so daß dadurch die Zunge in Längsrichtung der Hinterschneidungsnut gesichert ist.

Eine andere Festlegung ist in der Weise möglich, daß die Zungenwurzel durch eine Rastnase gesichert ist, die in eine Rastausnnehmung der Aufsteckkrone eingreift.

Eine besonders feste Halterung wird dadurch erzielt, daß die Zungenwurzel mit einer Schwalbenschwanznut über einen Schwalbenschwanzsteg einer Führung der Aufsteckkrone greift.

Eine Erhöhung des Formschlusses der Halterung wird dadurch erreicht, daß eine Rastnase der Zungenwurzel über eine Rastkante des Schwalbenschwanzsteges greift.

Eine Ausbildung der Hinterschneidungsnut sieht vor, daß die Hinterschneidungsnut durch ein in die Aufsteckkrone eingegossenes Blechprofil ausgebildet ist.

Damit die Zungenwurzel gut eingebaut werden kann, ist vorgesehen, daß die Zungenwurzel aus einem gleitfähigen Kunststoff besteht und daß eine Zunge aus Metallblech in die Zungenwurzel eingelegt ist.

Eine sichere Einbettung der Zunge in der Zungewurzel wir dadurch sichergestellt, daß die Zunge zwei parallele Einlegeschenkel aufweist, die innerhalb der Seitenstege der Zungenwurzel sitzen.

Eine Einstellung des nachgiebigen Zungeschenkels wird dadurch gesichert, daß der Zungenschenkel einen Gewindedurchgang für einen Gewindestift zur Einstellung des Zungenschenkels aufweist.

Eine genaue Ausbildung des Gewindes ist dadurch gewährleistet, daß der Gewindedurchgang in einer Einbettgewindehülse ausgebildet ist.

Eine andere Festlegung der Aufsteckkrone ist dadurch erzielt, daß der Zungenschenkel einen Rasthöcker aufweist, der in eine Ausnehmung der Unterkrone eingreift.

Eine Ausbildung der Zunge sieht vor, daß die Zunge aus Metallblech besteht.

Eine andere besonders kostengünstige Ausbildung der Zunge sieht vor, daß die Zunge aus Kunststoff besteht.

Ein besonders einfacher Einbau der Führung in dem Gußteil wird dadurch erzielt, daß zur Modellierung der einstückig in die Aufsteckkrone eingegossenen Führung ein Formling aus einem rückstandfrei verbrennbaren Kunststoff vorgesehen ist.

Ausführungformen der Erfindung werden im folgenden unter Bezugnahme auf die anliegende Zeichnung erläutert, in der darstellen:

Fig. 1 eine schematische Schnittansicht eines Zahnes mit Unterkrone und Aufsteckkrone in vergrößertem Maßstab,

Fig. 2 einen Ausschnitt der abgewickelten Innenseite der Aufsteckkrone in der Ansicht,

Fig. 3 einen Schnitt nach der Linie III-III in Fig. 1,

Fig. 4 einen vergrößerten Ausschnitt der Fig. 3,

Fig. 5 eine der Fig. 1 entsprechende Darstellung einer abgewandelten Ausführungsform der Erfindung,

Fig. 6 eine entsprechende Ansicht einer weiteren Abwandlung der Erfindung,

Fig. 7 eine Ansicht der Zunge der Ausführungsform nach Fig. 6,

Fig. 8 eine weitere Ausführungsform der Führungsteile,

Fig. 9 einen Schnitt nach der Linie IX - IX in Fig. 8,

Fig. 10 eine Unteransicht der Fig. 8 und

Fig. 11 einen Schnitt nach der Linie XI - XI in Fig. 8 im einmodellierten Zustand der Führung in das Modell einer Aufsteckkrone.

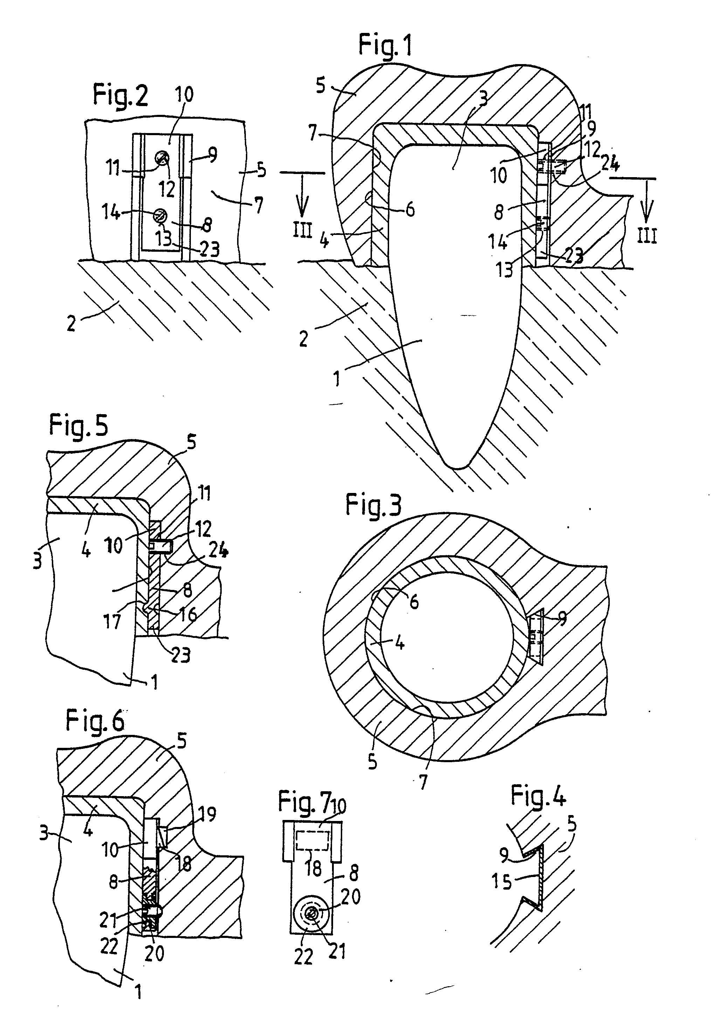

Fig. 1 zeigt in schematischer vergrößerter Darstellung eine Zahnwurzel 1, die im Kiefer sitzt. Die Zahnwurzel 1 endigt in einen Zahnstumpf 3, der mit einer Unterkrone 4 überkront ist. Diese Unterkrone 4 hat eine im wesentliche zylindrische Außenseite 6. Die Unterkrone 4 ist somit nicht anatomisch geformt.

An einer nicht dargestellten Prothese ist eine Aufsteckkrone 5 als Teleskopkrone ausgebildet und hat ebenfalls eine zylindrische Innenseite 7. Die zylindrische Außenseite 6 und die zylindrische Innenseite 7 passen teleskopartig ineinander. Sie sind jeweils parallel zur Aufsteckrichtung der Aufsteckkrone 5 ausgerichtet. Die Paßflächen der Außenseite 6 und der Innenseite 7 unterliegen im Gebrauch Veränderungen, so daß der Halt der Aufsteckkrone im Laufe der Zeit verringert wird. Dieses ist besonders bei Prothesen im Oberkiefer nachteilig.

Zur Einstellung der Haltekraft der Aufsteckkrone ist nach der Erfindung eine einstellbare Zunge 8 vorgesehen, die in einer Hinterschneidungsnut 9 der Aufsteckkrone 5 gehalten ist. Die Hinterschneidungsnut 9 ist nach der Darstellung der Fig. 3 und 4 als Schwalbenschwanznut ausgebildet. Jedoch ist auch jede andere Profilierung möglich. Die Zungenwurzel 10 weist eine Verbreiterung auf. Die seitli chen Stege passen in das Profil der Hinterschneidungsnut 9, wie man besonders den Fig. 2 und 3 entnimmt, so daß die Zungenwurzel 10 innerhalb der Hinterschneidungsnut 9 geführt ist. Damit die Zunge in ihrer Lage gehalten ist, ist in der Zungenwurzel 10 ein Gewindedurchgang 11 vorgesehen, in den ein Gewindestift 12 eingeschraubt ist, der in ein Loch 24 innerhalb der Aufsteckkrone 5 eingreift. Dieser Gewindestift 12 sichert die Zunge 8 bzw. die Zungenwurzel 10 in Längsrichtung der Hinterschneidungsnut. Gegen ein Heraustreten in Querrichtung der Hinterschneidungsnut 9 ist die Zunge durch die Profilierung der Zungenwurzel 10 gesichert.

Die Zunge 8 endigt in einen nachgiebigen Zungenschenkel 23. In demselben ist ein Gewindedurchgang 13 vorgesehen, in den ein Gewindestift 14 eingesetzt ist. Dieser Gewindestift 14 stützt sich mit seiner Gewindespitze auf der Innenseite der Aufsteckkrone 5 ab. Durch Drehen dieses Gewindestiftes 14 kann man das Zungenende in der gewünschten Weise abheben und aufstellen, so daß es aus der Hinterschneidungsnut 9 bzw. aus der Innenseite der Aufsteckkrone 5 herausragt. Dadurch läßt sich der Reibschluß und die Friktionskraft gegenüber der Außenseite der Unterkrone 4 einstellen. Diese Einstellung der Friktionskraft ist jederzeit nachstellbar, so daß die Haltekraft der Teleskopkrone und der daran sitzenden Prothese zu jedem Zeitpunkt eingestellt werden kann.

Die Formung der Hinterschneidungsnut kann mit Hilfe eines Platzhalters erfolgen. In anderer Weise kann man auch ein Blechprofil 15 bei der Modellierung in das Modell einsetzen. Dieses Blechprofil wird gemäß Fig. 4 in die Aufsteckkrone 5 eingegossen.

Im Vorigen ist eine Teleskopkrone beschrieben worden. Auch bei einer Konuskrone läßt sich die Halterung nach der Erfindung anwenden. In diesem Fall muß allerdings die Außenseite der Unterkrone und die Innenseite der Konuskrone jeweils einen zylindrischen Abschnitt aufweisen. Diese zylindrischen Abschnitte sind selbstverständlich aufeinander ausgerichtet.

Eine abgewandelte Ausführungsform der Erfindung ist in Fig. 5 dargestellt. Dort hat die Zunge 8 im Bereich ihres Rastendes einen Höcker 16, der rastend in eine Ausnehmung 14 der Unterkrone 4 eingreift.

Die Zunge der zuvor beschriebenen Ausführungsformem besteht aus Metallblech, insbesondere einem Edelmetallblech, das mit dem Innenmetall des Kronenaufbaus verträglich ist.

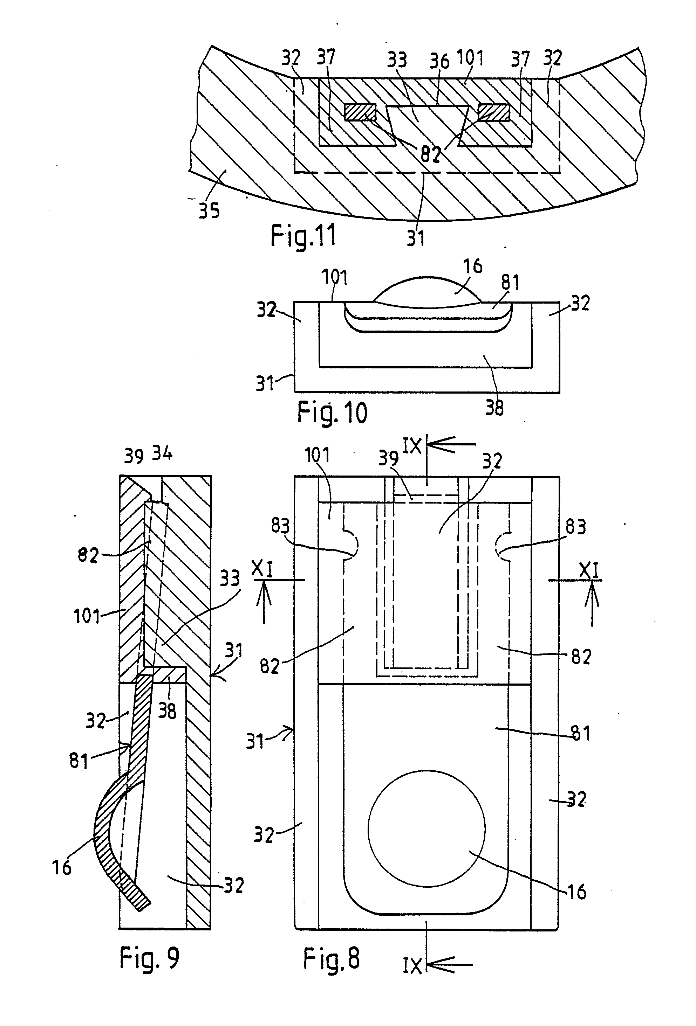

In anderer Weise kann man die Zunge nach den Fig. 6 und 7 auch aus Kunststoff als Thermoplastspritzgießteil herstellen. In diesem Fall steht im Bereich der Zungenwurzel eine Rastnase 18 vor, die in eine Rastausnehmung 19 der Innenseite der Aufsteckkrone 5 eingreift. In das Zungenende ist eine Gewindehülse 20 eingebettet. In das Gewinde der Gewindehülse 20 greift ein Gewindestift 21 ein, der in der zuvor beschriebenen Weise eine Einstellung des Zungenendes ermöglicht. Die Gewindehülse 20 reicht mit ihrem Stirnflansch 22 im wesentlichen bis zum Rand des Zungenschenkels. Hierdurch wird eine große Reibfläche und entsprechend eine gute Reibkraft sichergestellt.

Die Fig. 8 bis 11 zeigen eine weitere Ausführungsform der Erfindung, die für die Herstellung der Aufsteckkrone mit den Friktionsteilen sehr vorteilhaft ist. Zur Modellierung der Führung ist ein Formling 31 aus einem rückstandfrei verbrennbaren Kunststoff vorgesehen, der vom Zahntechniker in das Gußmodell der Aufsteckkrone einmodelliert werden kann. Dieser Formling 31 läßt sich sehr formgenau herstellen und sichert in dem fertigen Gußteil ebenfalls eine formgenaue Ausbildung der Führung. Der Formling 31 weist zwei paralle Wangen 32 auf, die zwischen sich eine im wesentlichen rechteckige Ausnehmung begrenzen. In einem Endbereich des Formlings 31 ist ein Schwalbenschwanzsteg 33 etwa im mittleren Teil zwischen den Wangen 32 vorgesehen, der eine Rastkante 34 aufweist.

Der Formling 31 wird in ein Modell 35 einer Aufsteckkrone einmodelliert, wobei der Zahntechniker ein Parallelgerät oder dergleichen zu Hilfe nimmt. Das Modell 35 wird zusammen mit Formling 31 in eine Gießvorrichtung eingebracht und in eine Einbettmasse eingebettet. Nach entsprechender Aushärtung der Einbettmasse wird das Modell 35 zusammen mit dem Formling 31 rückstandfrei ausgebrannt. Beim Guß wird der Formling 31 zusammen mit dem Modell 35 formgenau nachgebildet, wie es in Fig. 11 dargestellt ist. In Fig. 11 sind die Umrißlinien des Formlings 31 nur gestrichelt eingezeichnet, da der Formling 31 zusammen mit dem Modell 35 als einstückiges Gußteil nachgebildet ist.

Die Zungenwurzel 101 ist in diesem Fall aus einem gleitfähigen Kunststoff ausgebildet. Die Zungenwurzel 101 weist eine Schwalbenschwanz-nut 36 zwischen zwei Seitenstegen 37 auf. Die Seitenstege 37 sind durch eine Abschlußwand 38 miteinander verbunden, die den Einschub der Zungenwurzel 101 begrenzt. Etwa der Abschlußwand 38 gegenüber ist an der Zungenwurzel 101 im Bereich der Schwalbenschwanznut 36 eine Rastnase 39 vorgesehen, die mit der Rastkante 34 des Schwalbenschwanzsteges 33 zusammenwirkt.

In der Zungenwurzel 101 ist die Zunge 81 aus Metallblech eingebettet. Die Zunge 81 weist zwei parallel zueinander laufende Einlegeschenkel 82 auf, so daß der Einlegteil der Zunge 81 Ragabelförmig ausgebildet ist und einen Bereich für die Schwalbenschwanznut 36 freiläßt. Die Einlegeschenkel weisen Fixierausnehmungen 83 auf. Die Fig. 8 bis 11 zeigen die Zunge 81 in eingebettetem Zustand. Die Zunge 81 wird beim Spritzgießen von dem Kunststoffwerkstoff der Zungenwurzel 101 umformt, so daß sie fest und sicher in der Zungenwurzel eingebettet ist. Am freien Ende weist die Zunge einen Höcker 16 auf, der in üblicher Weise mit einer Ausnehmung der Unterkrone zusammenwirkt.

Nachdem der Formling 31 für die Führung innerhalb des Modells 35 angeordnet ist, erfolgt in der zuvor erläuterten Weise der Guß der Aufsteckkrone. Innerhalb des Gußteils ist die Führung dann formgetreu nachgebildet. Die Zungenwurzel 101 mit der Zunge 81 wird auf den Schwalbenschwanzsteg 33 aufgeschoben, wobei die Rastnase 39 rastend hinter die Rastkante 34 greift. Die Abschlußwand 38 legt die Zungenwurzel 101 in der Einschubstellung fest. Durch entsprechende Verbiegung der Zunge 81 läßt sich der Friktionskraft individuell nach den Wünschen des Prothesenträgers einstellen. Dieses ist dem Zahnarzt oder dem Zahntechniker ohne weiteres möglich. Falls einmal die Zunge 81 oder die Zungenwurzel 101 beschädigt werden sollte, so lassen sich diese Teile, die im übrigen sehr preiswert sind, leicht austauschen. Irgendwelche metallbearbeitenden oder wärmetechnischen Maßnahmen an der Prothese sind hierbei nicht erforderlich.

## Ansprüche

1. Aufsteckkrone zum Aufstecken auf eine Unterkrone, wobei die Außenseite der Unterkrone und die Innenseite der Aufsteckkrone jeweils mindestens einen parallel zur Aufsteckrichtung ausgerichteten Abschnitt aufweisen und wobei beide Abschnitte aufeinander passen, dadurch gekennzeichnet, daß die Innenseite (7) der Aufsteckkrone (5) im Bereich des genannten Abschnittes eine mit ihrer Wurzel (11) eingelegte Zunge (8) mit einem der Stirnöffnung der Aufsteckkrone (5) zugewandten, in die Stirnöffnung hineinracgenden, elastischen Schenkel (23) aufweist, der reibschlüssig mit der Außenseite (6) der Unterkrone (4) in Eingriff ist.

2. Aufsteckkrone nach Anspruch 1, dadurch gekennzeichnet, daß zur Aufnahme der Zungenwurzel (10) eine Hinterschneidungsnut (9) vorgesehen ist.

3. Aufsteckkrone nach Anspruch 2, dadurch gekennzeichnet, daß die Zungenwurzel (10) durch einen in ein Loch (23) innerhalb der Aufsteckkrone (5) eingreifenden Gewindestift (12) gesichert ist.

4. Aufsteckkrone nach Anspruch 2, dadurch gekennzeichnet, daß die Zungenwurzel (10) durch eine Rastnase (18) gesichert ist, die in eine Rastausnehmung (19) der Aufsteckkrone (5) eingreift.

5. Aufsteckkrone nach Anspruch 1, dadurch gekennzeichnet, daß die Zungenwurzel (10) mit einer Schwalbenschwanznut (36) über einen Schwalbenschwanzsteg (33) einer Führung der Aufsteckkrone greift.

6. Aufsteckkrone nach Anspruch 5, dadurch gekennzeichnet, daß eine Rastnase (39) der Zungenwurzel (101) über eine Rastkante (34) des Schwalbenschwanzsteges (33) greift.

7. Aufsteckkrone nach einem der Ansprüche 1 bis 6, dadurch gekennzeichnet, daß die Hinterschneidungsnut (9) durch ein in die Auf steckkrone (5) eingegossenes Blechprofil (15) ausgebildet ist.

8. Aufsteckkrone nach Anspruch 7, dadurch gekennzeichnet, daß die Zungenwurzel (101) aus einem gleitfähigen Kunststoff besteht und daß eine Zunge (81) aus Metallblech in die Zungenwurzel (101) eingelegt ist.

9. Aufsteckkrone nach Anspruch 8, dadurch gekennzeichnet, daß die Zunge (81) zwei parallele Einlegeschenkel (82) aufweist, die innerhalb der Seitenstege (37) der Zungenwurzel (101) sitzen.

10. Aufsteckkrone nach einem der Ansprüche 1 bis 4, dadurch gekennzeichnet, daß der Zungenschenkel (23) einen Gewindedurchgang (13) für einen Gewindestift (14) zur Einstellung des Zungenschenkels (23) aufweist.

11. Aufsteckkrone nach Anspruch 10, dadurch gekennzeichnet, daß der Gewindedurchgang in einer Einbettgewindehülse (20) ausgebildet ist.

12. Aufsteckkrone nach einem der Ansprüche 1 bis 11, dadurch gekennzeichnet, daß der Zungenschenkel einen Rasthöcker (16) aufweist, der in eine Ausnehmung (17) der Unterkrone (4) eingreift.

13. Aufsteckkrone nach einem der Ansprüche 1 bis 12, dadurch gekennzeichnet, daß die Zunge (8) aus Metallblech besteht.

14. Aufsteckkrone nach einem der Ansprüche 1 bis 12, dadurch gekennzeichnet, daß die Zunge (8) aus Kunststoff besteht.

15. Aufsteckkrone nach einem der Ansprüche 1 bis 14, dadurch gekennzeichnet, daß zur Modellierung der einstückig in die Aufsteckkrone eingegossenen Führung ein Formling aus einem rückstandfrei verbrennbaren Kunststoff vorgesehen ist.

Fig.1

Fig.2

Fig.5

Fig.3

Fig.6

Fig.7

Fig.4

Fig.11

Fig.10

Fig.9

Fig.8